(19) Europäisches Patentamt
European Patent Office
Office européen des brevets

(11) Publication number: **0 217 657 B1**

(12) **EUROPEAN PATENT SPECIFICATION**

(45) Date of publication of patent specification: **13.04.94**

(51) Int. Cl.$^5$: **C08G 59/32**, C08L 63/00, C08J 5/24

(21) Application number: **86307453.0**

(22) Date of filing: **29.09.86**

The file contains technical information submitted after the application was filed and not included in this specification

(54) **Low-viscosity epoxy resin, resin composition containing it, and fibre-reinforced composite material containing cured product of the composition.**

(30) Priority: **27.09.85 JP 216044/85**
**10.01.86 JP 3860/86**
**07.02.86 JP 26601/86**
**07.02.86 JP 26602/86**
**07.02.86 JP 26603/86**

(43) Date of publication of application:
**08.04.87 Bulletin 87/15**

(45) Publication of the grant of the patent:
**13.04.94 Bulletin 94/15**

(84) Designated Contracting States:
**CH DE FR GB IT LI SE**

(56) References cited:
**EP-A- 0 103 392**
**US-A- 2 951 825**

**DATABASE WPIL, no. 76-15917x, Derwent Publications Ltd, London, GB; & JP-A-55 25 217**

(73) Proprietor: **SUMITOMO CHEMICAL COMPANY, LIMITED**
**Kitahama 4-chome 5-33**
**Chuo-ku Osaka 541(JP)**

(72) Inventor: **Saito, Yasuhisa**
**1-2, Gojocho**
**Higashiosaka-shi(JP)**
Inventor: **Watanabe, Katsuya**
**18-1-112, Tamagawa-1-chome**
**Takatsuki-shi(JP)**
Inventor: **Okuno, Kohichi**
**14-15, Sukematsucho-1-chome**
**Izumiotsu-shi(JP)**
Inventor: **Kamio, Kunimasa**
**24-1-1108, Shinashiyakami**
**Suita-shi(JP)**
Inventor: **Morii, Akira**
**2-1-242, Kuwatacho**
**Ibaraki-shi(JP)**
Inventor: **Nakamura, Hiroshi**
**2-1, Kuwatacho**
**Ibaraki-shi(JP)**

(74) Representative: **Lamb, John Baxter et al**
**MARKS & CLERK**
**57-60 Lincoln's Inn Fields**
**London WC2A 3LS (GB)**

EP 0 217 657 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a low-viscosity epoxy resin, a resin composition containing the resin, and a fibre-reinforced composite material containing a cured product of the composition as matrix.

Epoxy resins are widely used because they have good curability, heat resistance, mechanical properties and adhesive and bonding properties. Epoxy resins are used, for example, in the electric and electronic fields, and in lamination and the formation of composite materials, mainly in airplanes. In these fields, better improved performances are currently required.

Thus, on the one hand, improvements in heat resistance and in mechanical properties at high temperature and high humidity are required. On the other hand, a low viscosity resin is required from the viewpoint of workability in the impregnation of an epoxy resin into fibrous material to make a prepreg. Although single nucleus type aromatic epoxy resins may be hoped to be epoxy resins fulfilling the above-mentioned requirements, none of the existing epoxy resins can meet all the requirements mentioned above.

Apart from the above, fibre-reinforced composite materials containing a cured epoxy resin composition as matrix and a fibrous reinforcing filler, such as a carbon, alumina or polyamide fibre or the like, are used as structural materials for various industries such as sports goods, leisure goods and the like owing to their excellent mechanical properties.

However, with the recent expansion of the field of application of composite materials, there has become desired a material which retains its excellent chemical stability and mechanical properties even under more severe conditions, e.g. higher temperature and higher humidity.

The resin used as matrix is important from the viewpoint of making a fibre-reinforced composite material exhibiting the characteristic properties of the reinforcing fibres to the greatest extent. Accordingly, the development of fibre-reinforced composite materials has been actively studied, using various epoxy resin compositions as matrix.

For example, in Japanese Patent Publication No. 25,217/80, there is proposed a carbon fibre-reinforced composite material comprising, as matrix, an epoxy resin derived from N, N,N',N'-tetraglycidylaminodiphenylmethane and the like and diphenyldiaminosulphone. Although this composite material has a high interlaminar shear strength and a high heat resistance, the cured product has low elongation and is, therefore, hard and brittle. In addition, it is not resistant to thermal shock. Accordingly, it is not satisfactory when put to special uses such as in airplanes. Further, a mixture consisting of N,N,N',N'-tetraglycidyldiaminodiphenylmethane and diphenyldiaminosulphone has a viscosity as high as 50 poises (5 Pa.s) or more at 50 °C, so that it is difficult to handle at room temperature. Further, the mixture has low reactivity and curing can only be sufficiently completed by after-curing at a high temperature of 180 °C or more for a period of at least four hours. If a boron trifluoride-monoethylamine complex or boron trifluoride-piperazine complex is added as a curing accelerator to this composition in order to overcome the above-mentioned fault, its reactivity may be improved but heat resistance of the composition deteriorates. In order to improve flexibility, a reactive elastomer may possible be added but it has been found this markedly reduces the heat resistance and bending strength of the composition.

Other epoxy resins which can be put to the above-mentioned uses, include, for example, Bisphenol A diglycidyl ether type epoxy resins having good adhesion to carbon fibres and the like, their pre-polymers with diaminodiphenylsulphone (DDS) and the like, phenolnovolac and cresol-novolac type epoxy resins, triglycidylaminophenol, and mixtures thereof.

However, these various resin compositions also suffer from disadvantages. Thus, the pre-polymer prepared from a Bisphenol A diglycidyl either type epoxy resin and DDS has too high a curing temperature and products moulded therefrom may have great residual stress and often have defects. Triglycidylaminophenol has poor water-resistance and its flexibility, interlaminar shear strength and bending strength are unsatisfactory and need to be improved. Apart from the above, there has also been proposed a resin composition prepared by combining a Bisphenol A diglycidyl ether type epoxy resin with dicyandiamide (curing agent) and a curing accelerator. However, such a combination brings about a marked decrease in the heat resistance of cured product. Thus, an epoxy resin whose heat resistance is not greatly reduced even if combined with this curing agent and curing accelerator is desired.

It has now been found, in accordance with the present invention, that certain epoxy resins, as hereinafter defined, have low viscosity and also have good heat resistance and mechanical properties at high temperature and humidity. These epoxy resing may advantageously be used in the production of fibre-reinforced products.

Thus, according to one embodiment of the invention, there is provided a low-viscosity epoxy resin which is a low-viscosity triglycidyl derivative of 4-amino-m-cresol or 3-ethyl-4-aminophenol; the viscosity of the triglycidyl derivatives being 15 poises (1.5 Pa.s) or less as measured at 25 °C.

The invention also provides an epoxy resin composition comprising (A) the low-viscosity triglycidyl derivative as defined above, and (C) an epoxy curing agent (i.e. a curing agent for a polyglycidyl material).

The invention further provides a fibre-reinforced composite material the matrix of which comprises the cured product of the above epoxy resin composition.

According to a preferred embodiment of the invention there is provided a heat resistant fibre-reinforced composite material which contains, as matrix, a cured product of an epoxy resin composition comprising:

(A) a triglycidyl derivative as defined above,

(B) N,N,N',N'-tetraglycidylbis(aminophenyl)-methane and/or a condensation product thereof, and

(C) an epoxy curing agent.

The invention also provides as a yet further preferred embodiment a fibre-reinforced composite material which contains, as matrix, a cured product of an epoxy resin composition comprising:

(A) a triglycidyl derivative as defined above,

(B') a phenol-novolac type epoxy resin, cresol-novolac type epoxy resin and/or a Bisphenol A diglycidyl ether type epoxy resin, and

(C) an epoxy curing agent.

The low viscosity of the triglycidyl derivatives of the invention is mainly attributable to the facts that they have a single aromatic ring nucleus as their fundamental structure, there is a very low content of components composed of two or more aromatic rings linked together through intermediate $-CH_2CH(OH)-CH_2$-group, and the epoxy group content may be as high as 90% or more of theoretical. Further, the low content of hydroxyl group due to $-CH_2CH(OH)CH_2-$ units also contributes to the low viscosity.

The low-viscosity triglycidyl derivatives may be prepared by reacting the corresponding alkyl substituted aminophenol with a large excess of an epihalohydrin at a temperature not higher than 100 °C to add the epihalohydrin to the amino group; followed by the dropwise addition of an aqueous solution of an alkali metal hydroxide (e.g. sodium or potassium hydroxide) to the reaction system at a temperature of 40 °C to 100 °C under reduced pressure whilst simultaneously distilling off water formed in the reaction system as an azeotropic mixture to give rise to an epoxidation reaction.

In contrast to prior epoxidation reactions, the above process is characterized in that side reactions other than epoxidation are largely suppressed as a result of which the triglycidyl derivative formed has a high epoxy group content and a low molecular weight.

The triglycidyl derivatives of the present invention have three glycidyl groups linked to one aromatic ring and have a higher epoxy group content as compared with existing polyglycidyl derivatives, as a result of which cured products obtained therefrom have a high crosslinking density and exhibit high heat resistance.

As is well known, the mechanical properties of a cured product in the presence of water at high temperature are greatly influenced by the water absorption properties of the product. Since the cured product obtained from the above-mentioned triglycidyl derivative has high crosslinking density, it has low water absorption and exhibits excellent mechanical properties even in the presence of water at high temperatures. Further, the triglycidyl derivatives of the invention have an alkyl group on an aromatic ring, and this alkyl group also contributes to low water absorption.

The production process of the triglycidyl derivative of the present invention and the properties of the triglycidyl derivative obtained by the process are as mentioned above, provided that its production process is not limited to the above-mentioned one.

The alkyl substituted aminophenol used as starting material for the triglycidyl derivative is 4-amino-m-cresol or 3-ethyl-4-aminophenol. Of these, 4-amino-m-cresol is particularly preferred.

The triglycidyl derivatives of the present invention exhibit good properties when combined with known existing curing agents. A particularly important field of application is use as a matrix resin for fibre-reinforced laminates and composite materials. In this field, there is an increasing desire for improvements in toughness and flexibility. With this aim, it has been proposed to add various thermoplastic resins to the prior epoxy resin/curing agent systems and partially or wholly replace the usual curing agent with various reactive oligomers having a functional group reactive with epoxy groups. However, such addition or replacement brings about an important problem in that the resin system thus obtained has a higher viscosity than prior systems and therefore is inferior in impregnating performance. In contrast, the triglycidyl derivatives of the present invention have a very low viscosity and can retain a sufficiently low viscosity even if combined with thermoplastic resins or reactive oligomers and the combined system is usable similarly to the prior systems. Needless to say, the triglycidyl derivatives of the present invention retain heat resistance and mechanical properties in the presence of moisture at high temperatures, even under such conditions.

As used herein, the term "reactive oligomer" means an oligomer having at the end of its molecule, a functional group such as -OH, -SH, -COOH,

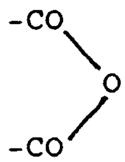 ,

$-NH_2$ or -NHR (R is a lower alkyl group). Specific examples of such reactive oligomer include terminal functional group type oligomers having the following chain structures:

(1) polyaryl ethers such as:

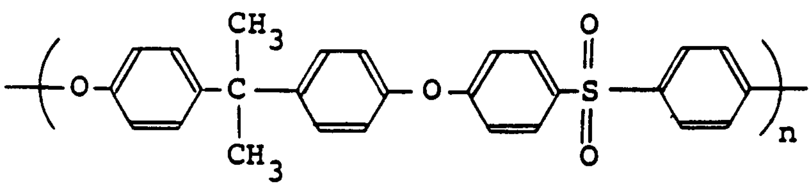 ,

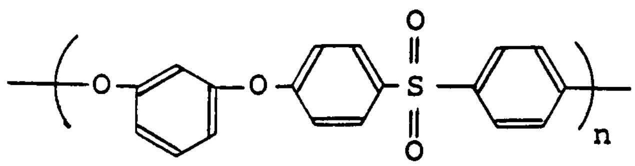

,

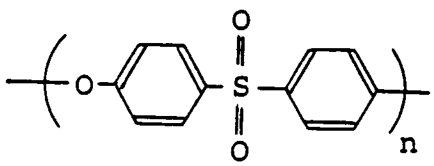

,

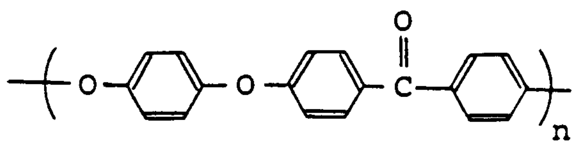

,

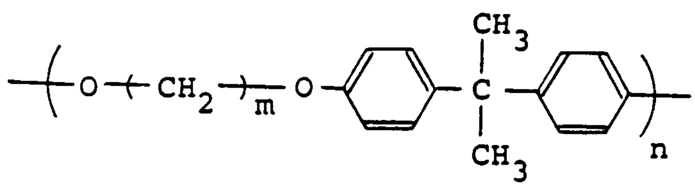

,

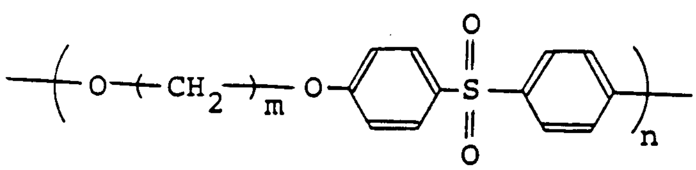

,

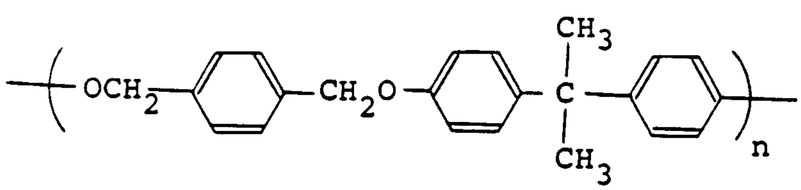

,

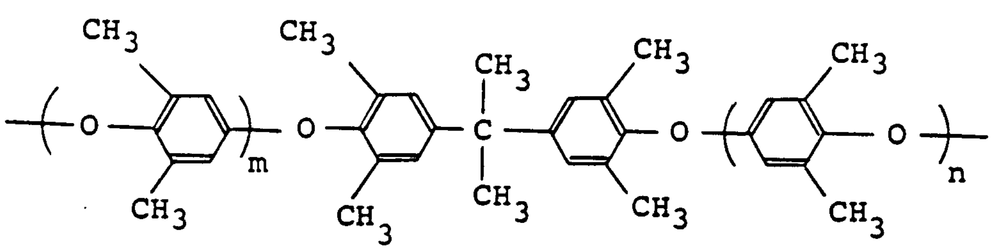

;

(2) polycarbonates such as:

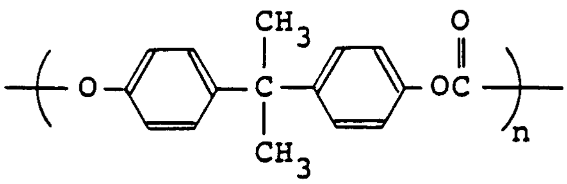 , 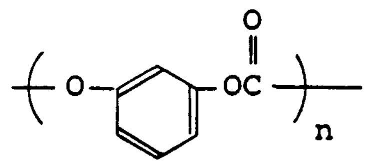 ;

(3) polyacrylates such as:

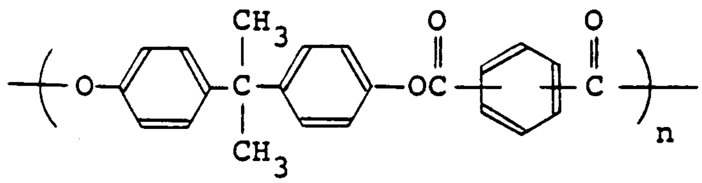 ,

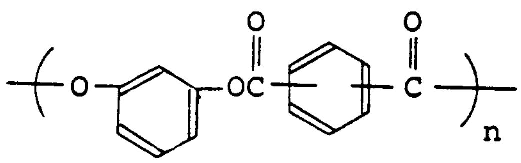 ;

(4) polyarylene sulfides such as:

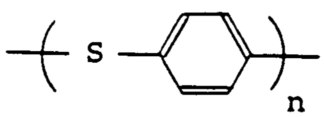 , 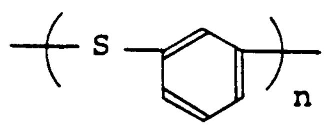 ;

and

(5) polyimides, polyamide-imides and polyamides such as:

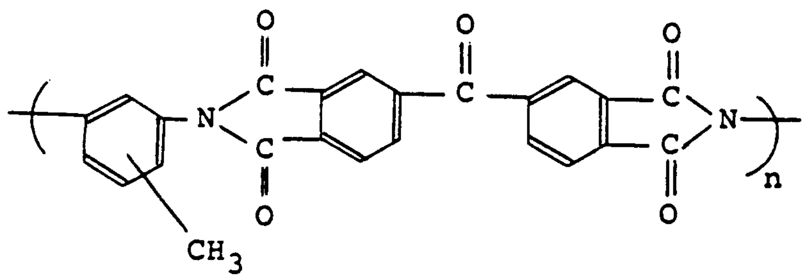

,

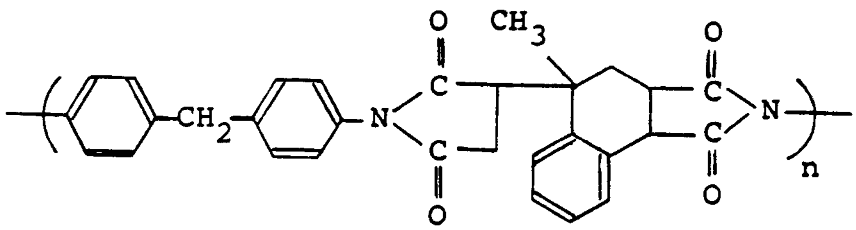

,

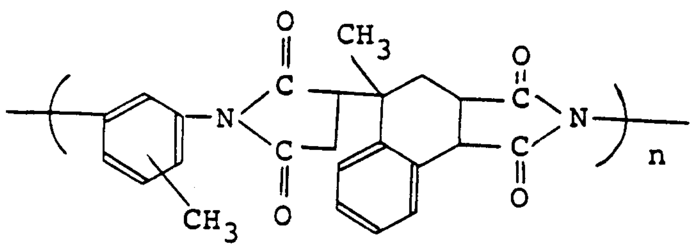

,

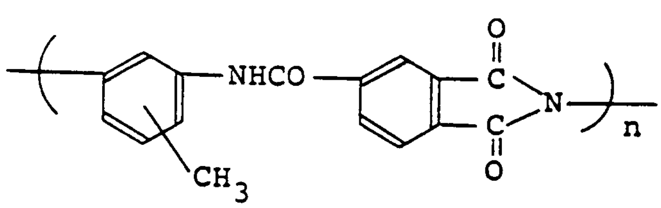

,

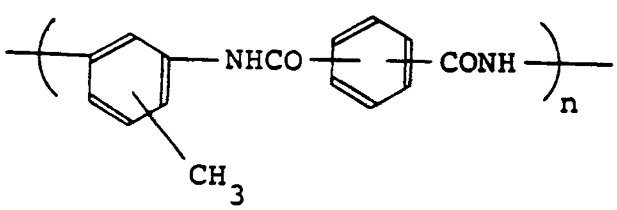

.

There may also be mentioned terminal amine-containing polysiloxanes, terminal amine- or terminal carboxyl-containing butadiene/acrylonitrile copolymers, terminal amine-, terminal hydroxy- or terminal carboxyl-containing polyisobutylenes, and compounds of the formula:

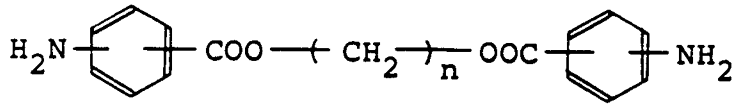

,

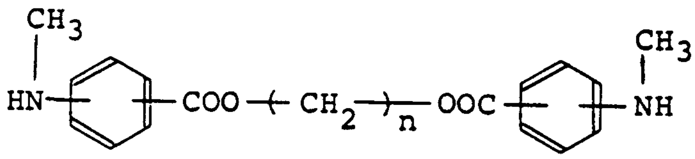

,

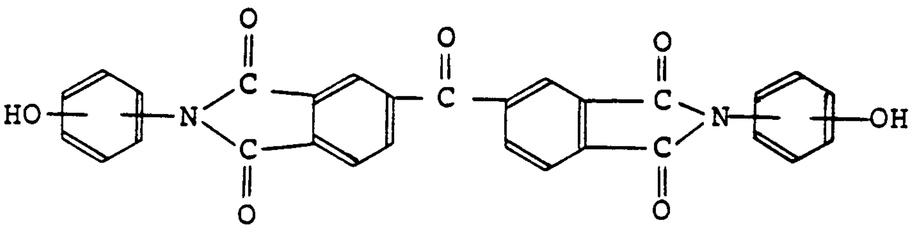

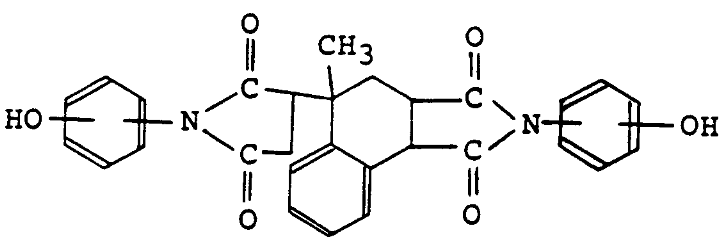

,

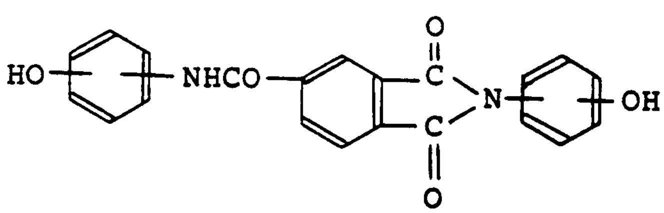

.

These reactive oligomers are used as a single substance or in admixture.

Examples of thermoplastic resins include resins of the following basic structures:

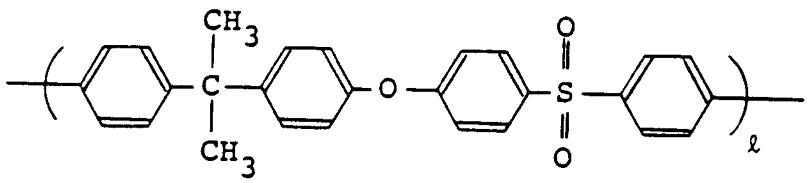

,

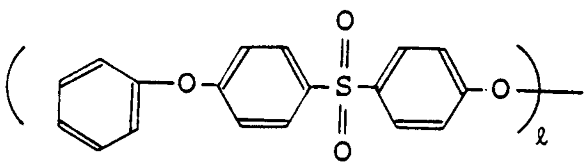

,

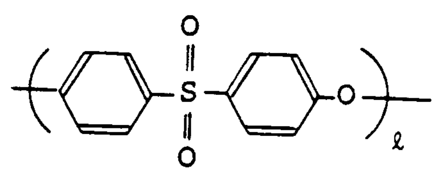

,

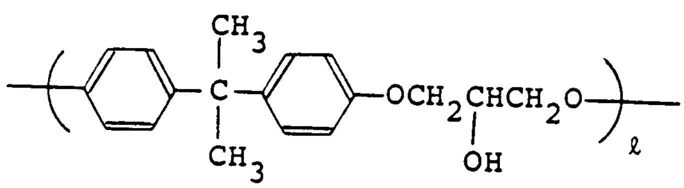

,

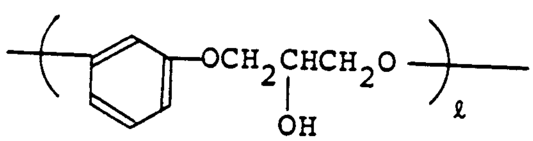

,

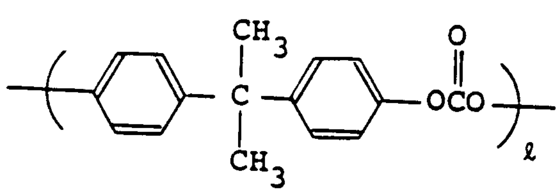

,

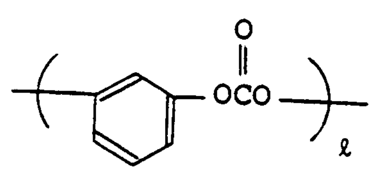

,

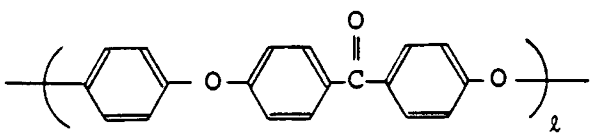

,

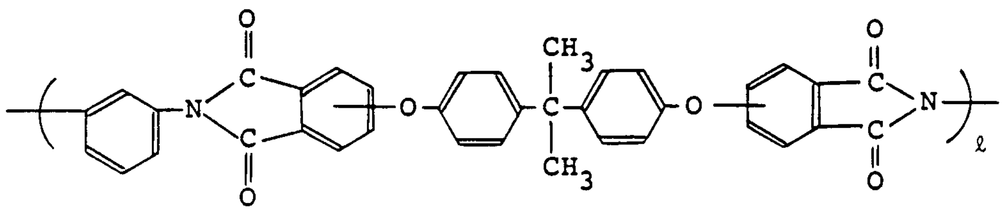

,

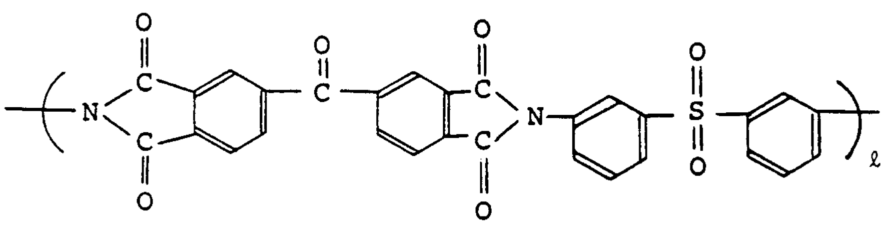

,

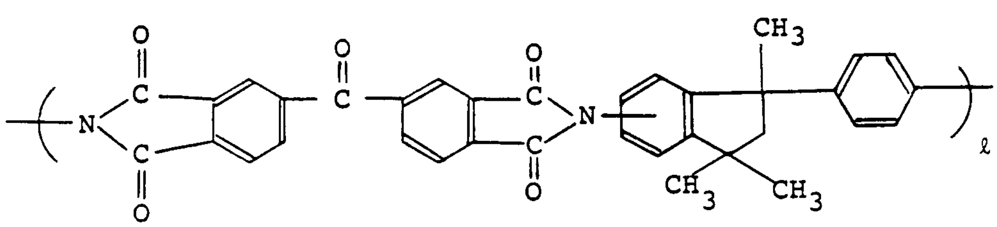

,

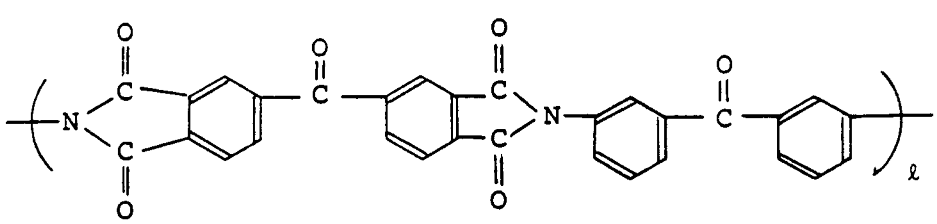

,

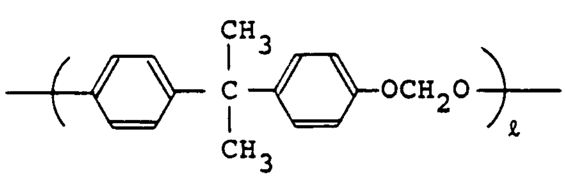

,

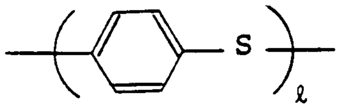 , 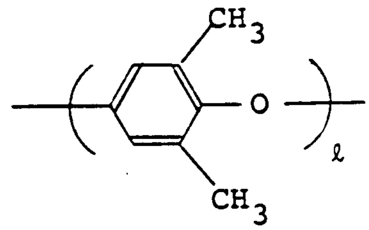 ,

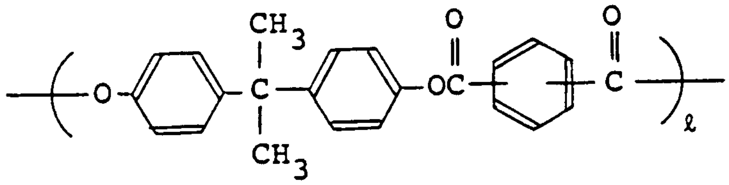 ,

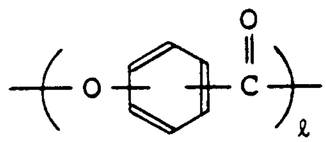

Other thermoplastic resins are polybutadiene, butadiene/acrylonitrile copolymers, butadiene/acrylonitrile/styrene copolymers, nylon-6,12, nylon-6, polyethylene terephthalate, polybutylene terephthalate, polytetramethylene glycol/butanediol/terephthalic acid copolycondensation polyesters, polybutyl acrylate and butyl acrylate/methyl methacrylate copolymers. These thermoplastic resins may be used alone or in admixture.

In the filament winding process, a low viscosity resin is particularly necessary, and curing agents currently usable in this process are limited to special agents such as liquid acid anhydrides or eutectic mixtures of diaminodiphenylmethane and m-phenylenediamine. If the triglycidyl derivatives of the present invention are used, however, limitation of the curing agent is unnecessary and the curing agent can be selected in accordance with the required properties.

As the N,N,N',N'-tetraglycidylbis(aminophenyl)-methane and/or condensation product therefor used as component (B) in the invention, commercially available materials such as Sumiepoxy ELM-434 (manufactured by Sumitomo Chemical Co. Ltd., the word "Sumiepoxy" is a Registered Trade Mark), Araldite MY-720 and My-9512 (manufactured by Ciba Geigy Ltd, the word "Araldite" is a Registered Trade Mark) are generally usable.

The amount of the triglycidyl derivative [Component (A)] to be added to the N,N,N',N'-tetraglycidylbis-(aminophenyl)- methane and/or condensation product thereof as component (B) is usually 10 to 50% by weight, preferably 10 to 30% by weight, based on the weight of (B). If the amount of (A) exceeds 50% by weight, the pot life of the resin composition decreases. If the amount of (A) is smaller than 10% by weight, the improvement in flexibility is small.

Examples of phenol-novolac type epoxy resins which may be used as components (B'), are those composed mainly of polyfunctional epoxy compounds of the formula:

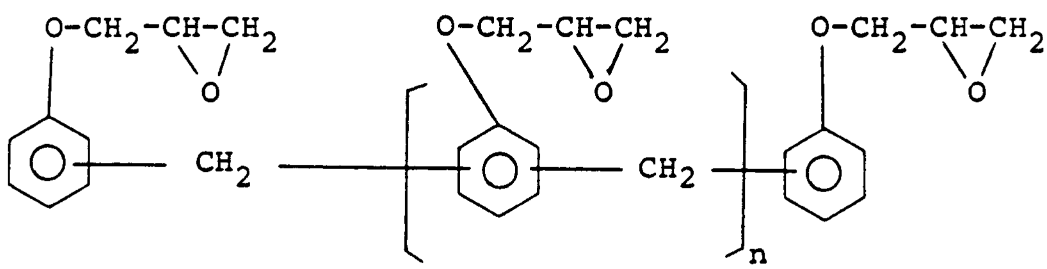

wherein n represents the average degree of polymerization and is generally from 0.5 to 10. Specific examples include Sumiepoxy ELPN-180 (manufactured by Sumitomo Chemical Co. Ltd), DEN-431, -438 and -439 (manufactured by Dow Chemical Co.) and Epikote -152 and -154 (manufactured by Shell Chemical Co., the word "Epikote" is a Registered Trade Mark).

Examples of cresol-novolac type epoxy resins for use as component (B') are those composed mainly of polyfunctional epoxy compounds of the formula:

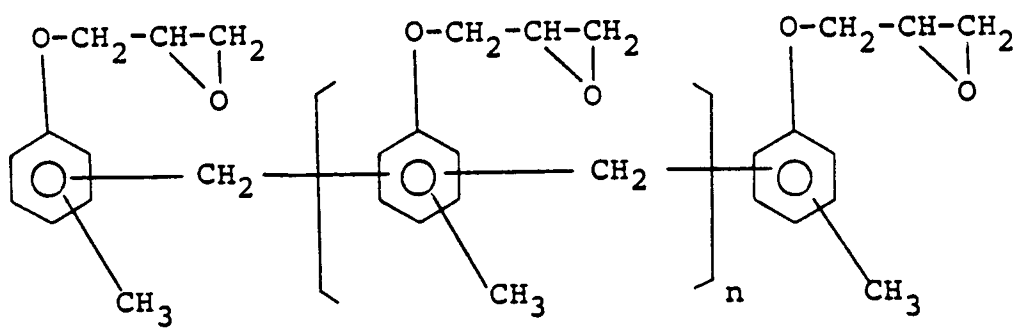

wherein n represents the average degree of polymerization and is generally from 0.5 to 10. Specific examples include Sumieposy ESCN-205L, 220L, 220H, 220HH and 195XL (manufactured by Sumitomo Chemical Co. Ltd.), and Araldite ECN-1235 and 9511 (manufactured by Dow Chemical Co.).

Bisphenol A diglycidyl ether type epoxy resins for use as component (B') may be represented by the formula:

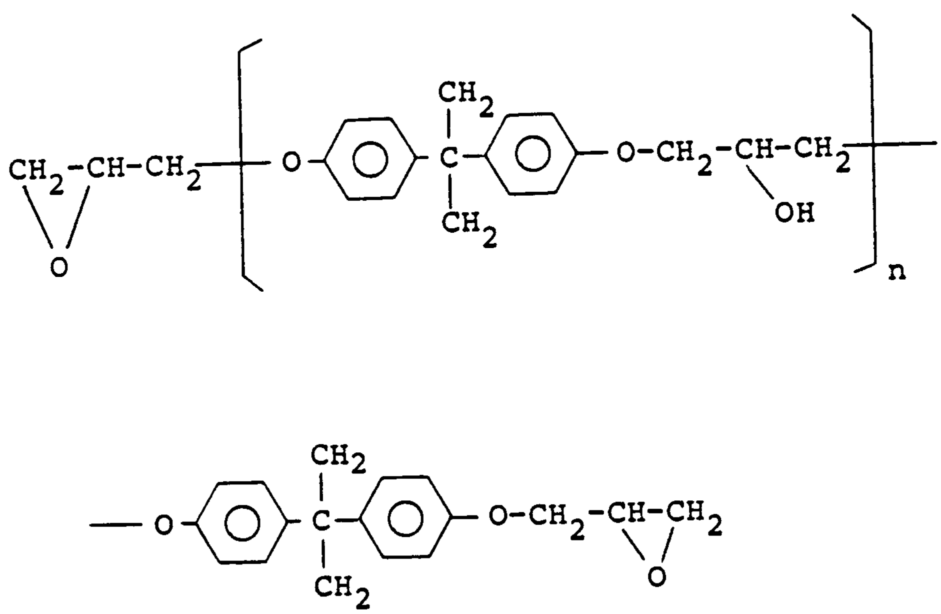

wherein n represents the average degree of polymerization and is generally from 0.1 to 20. Specific examples include Sumiepoxy ELA-127, ELA-128, ELA-134, ESA-011, -012, -014, -017, -019 (manufactured by Sumitomo Chemical Co. Ltd.), and Epikote Ep-808, -827, -1001, -1002, -1004, -1007, -1009 (manufctured by Shell Chemical Co. Ltd.). These epoxy resins may be used alone or in admixture.

When two or more epoxy resins are used in admixture, the amount of Bisphenol A diglycidyl ether type epoxy resin is preferably from 0.25 to 1 part by weight per part by weight of the total amount of phenol-novolac type epoxy resin and/or cresol-novolac type epoxy resin.

The weight ratio of component (A) to component (B') is preferably from 5 : 100 to 70 : 100. If the amount of component (A) is smaller than 5% by weight of component (B') low temperature curability cannot be greatly improved. If the amount of component (A) is larger than 70% by weight, storage stability is unsatisfactory.

As the epoxy curing agent used in the invention, any conventional curing agent as used for curing epoxy resins can be used. Examples of such epoxy curing agents include dicyandiamide, tetramethylguanidine, phenol-novolac resins, cresol-novolac resins, acid anhydrides, acid hydrazide compounds, aromatic amines, aliphatic amines, alicyclic amines and boron trifluoride complexes. These curing agents may be used alone or in admixture.

Examples of acid anhydride curing agents include tetrahydrophthalic anhydride, methyltetrahydrophthalic anhydride, hexahydrophthalic anhydride, methylhexahydrophthalic anhydride, dodecenylsuccinic anhydride, nadic anhydride, methylnadic anhdyride, phthalic anhydride, pyromellitic anhydride, benzophenonetetracarboxylic acid anhydride, methylcyclohexenetetracarboxylic acid anhydride, 3,4-dicarboxy-1,2,3,4-tetrahydro-1-naphthalenesuccinic acid dianhydride and 1-methyl-3,4-dicarboxy-1,2,3,4-tetrahydro-1-naphthalenesuccinic acid dianhydride.

Examples of aromatic amine curing agents include 4,4'-diaminodiphenylmethane, 3,3'-diaminodiphenylmethane, 4,4'-diaminodiphenyl ether, 3,4'-diaminodiphenyl ether, 4,4'-diaminodiphenylpropane, diaminodiphenylsulphone compounds such as 4,4'-diaminodiphenylsulphone and 3,3'-diaminodiphenylsulphone, 2,4-toluenediamine, 2,6-toluenediamine, m-phenylenediamine, p-phenylenediamine, benzidine, 4,4'-diaminodiphenyl sulphide, 3,3'-dichloro-4,4'-diaminodiphenylsulphone, 3,3'-dichloro-4,4'-diaminodiphenylpropane, 3,3'-dimethyl-4,4'-diaminodiphenylmethane, 3,3'-dimethoxy-4,4'-diaminobiphenyl, 3,3'-dimethyl-4,4'-diaminobiphenyl, 1,3-bis(4-aminophenoxy)-benzene, 1,3-bis(3-aminophenoxy)-benzene, 1,4-bis(4-aminophenoxy)-benzene 2,2-bis(4-aminophenoxyphenyl)-propane, 4,4'-bis(4-aminophenoxy)-diphenylsulphone, 4,4'-bis(3-aminophenoxy)diphenylsulphone, 9,9'-bis(4-aminophenyl)-anthracene, 9,9'-bis(4-aminophenyl)-fluorene, 3,3'-dicarboxy-4,4'-diaminodiphenylmethane, 2,4-diaminoanisole, bis(3-aminophenyl)-methylphosphine oxide, 3,3'-diaminobenzophenone, o-toluidine sulphone, 4,4'-methylene-bis-o-chloroaniline, tetrachlorodiaminodiphenylmethane, m-xylylenediamine, p-xylylenediamine, 4,4'-diaminostilbene, 5-amino-1-(4'-aminophenyl)-1,3,3-trimethylindane,6-amino-1-(4'-aminophenyl)-1,3,3-trimethylindane, 5-amino-6-methyl-1-(3'-amino-4'-methylphenyl)-1,3,3-trimethylindane, 7-amino-6-methyl-1-(3'-amino-4'-methylphenyl)-1,3,3-trimethylindane, 6-amino-5-methyl-1-(4'-amino-3'-methylphenyl)-1,3,3-trimethylindane, 6-amino-7-methyl-1-(4'-amino-3'-methylphenyl)-1,3,3-trimethylindane, and the compounds of the formulae:

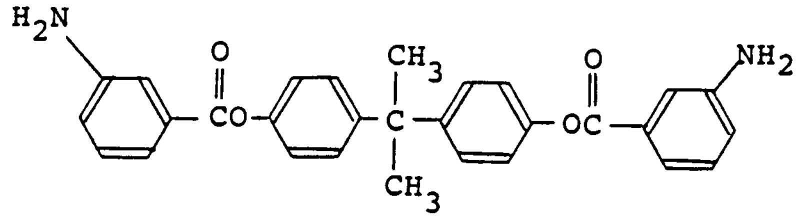

,

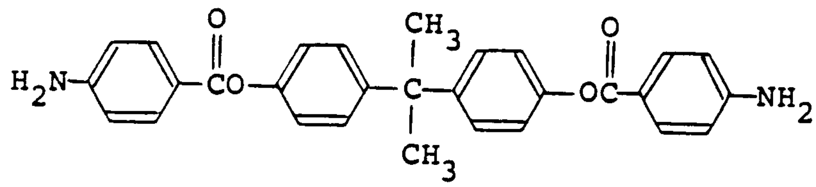

,

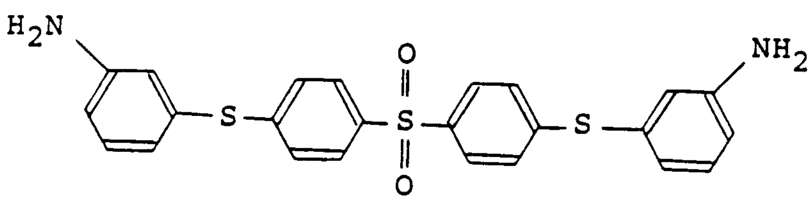

,

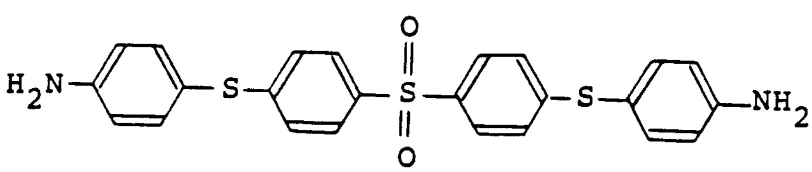

,

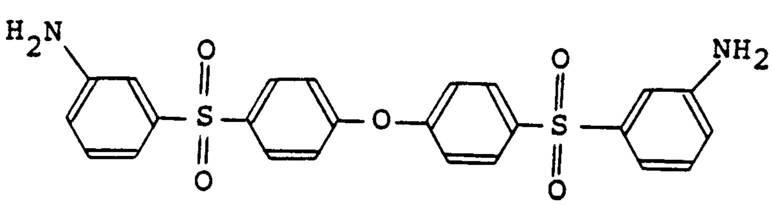

,

Of the epoxy curing agents, dicyandiamide, acid anhydrides, acid hydrazide compounds and aromatic amines are preferred.

The amount of epoxy curing agent should be appropriately decided considering the nature of the curing agent and the nature of the resins to be cured. In general, however, the curing agents are used in an amount of 0.7 to 1.2 times the stoichiometric amount based on the resins to be cured.

In this case, for example, when the curing agent is dicyandiamide, it is preferably used in an amount of from 2 to 9 parts by weight, more preferably 3 to 7 parts by weight, per 100 parts by weight of the total amount of components (A) and (B'). When the epoxy curing agent is an acid hyrazide, its amount should be 2 to 50 parts by weight. When a curing accelerator is used in addition to the epoxy curing agent and the

epoxy curing agent is dicyandiamide, the amount of dicyandiamide is preferably 0.5 to 8 parts by weight, more preferably 1 to 6 parts by weight, per 100 parts by weight of the total of components (A) and (B').

The triglycidyl derivatives of the invention may be used in combination with previously known epoxy resins. Particularly when they are used in combination with an epoxy resin having a high viscosity or a solid epoxy resin, they effectively serve as a reactive diluent.

Examples of previously known epoxy resins include glycidyl ether compounds derived from dihydric, trihydric or higher-hydric phenols such as Bisphenol A, Bisphenol F, hydroquinone, resorcinol, phloroglucinol, tris(4-hydroxyphenyl)-methane, 1,1,2,2-tetrakis-(4-hydroxyphenyl)-ethane or halogenated bisphenols such as tetrabromo Bisphenol A; epoxy novolac resins derived from novolac resins which are reaction products between formaldehyde and phenols such as phenol and o-cresol; amine type epoxy resins derived from aniline, p-aminophenol, m-aminophenol, 4,4'-diaminodiphenylmethane, 3,3'-diaminodiphenylmethane, 4,4'-diaminodiphenyl ether, 3,4'-diaminodiphenyl ether, 1,4-bis(4-aminophenoxy)-benzene, 1,4-bis(3-aminophenoxy)-benzene, 1,3-bis(4-aminophenoxy)-benzene, 1,3-bis(3-aminophenoxy)-benzene, 2,2-bis(4-aminophenoxyphenyl)-propane, p-phenylenediamine, m-phenylenediamine, 2,4-toluenediamine, 2,6-toluenediamine, p-xylylenediamine, m-xylylenediamine, 1,4-cyclohexane-bis-(methylamine), 1,3-cyclohexane-bis(methylamine), 5-amino-1-(4'-aminophenyl)-1,3,3-trimethylindane and 6-amino-1-(4'-aminophenyl)-1,3,3-trimethylindane; glycidyl ester compounds derived from aromatic carboxylic acids such as p-oxybenzoic acid, m-oxybenzoic acid, terephthalic acid and isophthalic acid; hydantoin type epoxy resins derived from 5,5-dimethylhydantoin; alicyclic epoxy resins such as 2,2'-bis(3,4-epoxycyclohexyl)-propane, 2,2-bis-(4-(2,3-epoxypropyl)-cyclohexyl)-propane, vinylcyclohexene dioxide and 3,4-epoxycyclohexylmethyl-3,4-epoxycyclohexanecarboxylate; triglycidyl isocyanurate and 2,4,6-triglycidoxy-s-triazine.

Further, as curing accelerator, hitherto known tertiary amines, phenolic compounds, imidazoles or Lewis acids may be added, if desired.

Examples of fibres which can be used as reinforcing materials include inorganic and organic fibres having a tensile strength of 0.5 GPa or above and a Young's modulus of 50 GPa or above, such as carbon fibres, graphite fibres, glass fibres, silicon nitride fibres, aromatic polyamide fibres, aromatic polyester fibres, and polybenzimidazole fibres. These fibres can be used in the form of continuous tows, woven fabrics, short fibres or whiskers.

For some purposes, two or more kinds of fibres or fibres of different shape may be used together. Further, the reinforcing fibres may be used in conjunction with particulate substances such as talc, mica, calcium carbonate, alumina hydrate, silicon carbide, carbon black or silica, for example to improve the viscosity of the composition and thereby facilitate moulding process or to improve the properties, such as compression strength, of the composite material.

The composite materials of the invention may be produced by any known process for producing fibre-reinforced composite materials having an epoxy resin as matrix.

One example of such a process is one which comprises laminating a plurality of sheet form prepregs and heating the laminate under elevated pressure in an autoclave to obtain a composite material.

As used herein, the term "prepreg" means a product prepared by impregnating a reinforcing fibrous structure with the resin composition, and it can take the form of a sheet, continuous tow, strand, yarn or pellet. In the sheet-form prepreg, the reinforcing fibres may take the form of a drawn and oriented continuous tow, a mat made from entangled of short-fibres, or a woven fabric. Further, a laminated sheet-like prepreg formed by superposing a plurality of sheets of different structure and a material prepared by bundling several continuous tow prepregs are also useful.

The fibre content of the prepregs is preferably 5 to 70% by volume and particularly 10 to 60% by volume.

The prepreg can be produced by impregnating or mixing an assembly of reinforcing material with a resin composition or its partially cured product which has been liquefied by dissolution or melting as necessary, followed by optionally heating it to cause a partial cure.

According to another possible embodiment of the invention, chopped strands, mats or woven cloths of reinforcing fibres are laminated in a mould, impregnated with a resin composition and then thermally cured to give a moulded product. The fibre content of these composite materials is usually 5 to 70% by volume. A fibre content of 10 to 60% by volume is particularly preferred from the viewpoint of giving the composite material good properties.

In order that the invention may be well understood the following examples are given by way of illustration only. In the examples all parts are by weight unless otherwise stated.

Example 1

Into a flask equipped with a stirrer, a thermometer, a cooling and separating device and a dropping funnel were charged 185 g (1.5 moles) of 4-amino-m-cresol and 2,082 g (22.5 moles) of epichlorohydrin. After dissolution, the resulting solution was kept at 40 °C for 15 hours. Then it was heated to 65 °C, and 413 g (4.96 moles) of a 48% aqueous solution of sodium hydroxide was dropped theein over a period of 4 hours while azeotropically distilling off the water formed in the system under a reduced pressure of 150 mm Hg (0.2 Bar). Subsequently, the excess eipichlorohydrin was distilled off under final conditions of 70 °C and 5 mm (6.7 m bar). After the epichlorohydrin had been distilled off, the resin was dissolved in 900 g of methyl isobutyl ketone, washed with water and filtered to remove the resulting salt and gelatinous substance, after which the methyl isobutyl ketone was distilled off under final conditions of 120 °C and 5 mm Hg (6.7 mBar) to obtaion a polyglycidyl derivative having an epoxy equivalent of 104 g/eq and a viscosity of 9.7 poises (0.97 Pa.s) at 25 °C.

SYNTHESIS Example 1

Into a flask equipped with a stirrer, a thermometer and a cooling-separating device were charged 79.9 g (0.578 mole) of powdered potassium carbonate, 116.4 g (0.405 mole) of 4,4-dichlorodiphenylsulphone, 82.6 g (0.362 mole) of Bisphenol A, 132 g of toluene and 302 g of dimethylacetamide. The mixture was heated to 70 °C while blowing 10 litres per hour of nitrogen (the blowing of nitrogen was continued till the reaction was completed). Thirty minutes later, 9.76 g (0.894 mole) of p-aminophenol was added, and the reaction mixture was heated to continue reaction while azeotropically distilling off water. The reaction temperature was kept near 160 °C, and completion of the reaction took 10 hours. After the reaction, the resulting salt was filtered off and the solvent was partially distilled off, after which the product was precipitated in water/methanol mixture and the precipitate was washed with methanol and dried under reduced pressure to give a terminal amine-containing polysulphone oligomer having an average molecular weight of 4,320, as calculated from terminal amino group analysis.

EXAMPLE 2

The polyglycidyl derivative of Example 1 the reactive oligomer of Synthesis Example 1 and Sumiepoxy ELM-434 (tetraglycidyl derivative of 4,4'-diaminodiphenylmethane manufactured by Sumitomo Chemical Co. Ltd.) were compounded as shown in Table 1 to give homogeneous solutions whose viscosities were measured. As a result it was found that formulation A had sufficiently low viscosities to form a prepreg in combination with carbon fibres. No prepreg could be found formed from (B) (Comparative Example) because of its high viscosity.

TABLE 1

| | | A | B (Comparative example) |
|---|---|---|---|
| Epoxy resin (pbw) | Example 1 | 100 | - |
| | Example 2 | - | - |
| | Sumiepoxy ELM-434 | - | 100 |
| Oligomer (pbw) | Synthesis Example 1 | 80 | 80 |
| | Synthesis Example 2 | - | - |
| 4,4'-Diaminodiphenylsulfone | | 50 | 45 |
| Viscosity (poise/150°C) | | 35 | > 1,000 |

EXAMPLE 3

Using resin composition A of Example 2 as matrix, unidirectionally reinforced composite materials containing 60% by volume of carbon fibres were prepared. Characteristic properties of carbon fibres were as follows: tensile strength = 420 kgf/mm$^2$ (4.1 GPa), elastic modulus = 24,000 kgf/mm$^2$ (235 GPa), elongation at break = 1.8%. The curing conditions were as follows: pressing at 180°C, 30 atm. (2.94 MPa) for 2 hours; post-cure at 200°C for 4 hours. Properties of the composite material thus obtained, named C, were shown in Table 2.

TABLE 2

| | | C |
|---|---|---|
| Tensile strength | $kg/mm^2$ (GPa) | 241 (2.36) |
| Tensile modulus | " | 13,500 (132) |
| Tensile elongation | % | 1.8 |
| Bending strength | $kg/mm^2$ (GPa) | 235 (2.31) |
| Bending modulus | " | 13,100 (129) |
| $G_{1C}$ | $KJ/m^2$ | 0.74 |
| Izod impact strength | " | 210 |

Note: $G_{1C}$ (Critical strain energy release rate): measured according to NASA RP 1092-83

Tensile characteristics: measured according to ASTM D-3039

Bending characteristics: measured according to ASTM D-790

Izod impact strength: measured according to JIS K-6911.

EXAMPLE 4

Following the formulations shown in Table 3, the triglycidyl derivative of Example 1, Sumiepoxy ELM-120 (manufactured by Sumitomo Chemical Co. Ltd., epoxy equivalent 122 g/eq) and Sumiepoxy ELPN-180 (manufactured by Sumitomo Chemical Co. Ld., epoxy equivalent 181 g/eq) were compounded and made into homogeneous solutions at about 120°C. After immediately removing the bubbles under reduced pressure, the viscosities of the compositions were measured. Then, the compositions were heated and cured first at 120°C for 2 hours and subsequently at 180°C for 5 hours and properties of the cured products were measured. The results are shown in Table 3.

Table 3

| Kind of epoxy resin | Example 1 | ELM-120 | ELPN-180 |
|---|---|---|---|
| Amount of epoxy resin - parts by weight | 100 | 100 | 100 |
| 4,4'-Diaminodiphenylsulfone - p.b.w. | 58 | 50 | 34 |
| $BF_3$-MEA*1 -p.b.w. | 0.58 | 0.5 | 0.34 |
| Viscosity of epoxy resin composition at 120°C - CP(mPa.s) | 50(50) | 190(180) | 280(280) |
| Tg*2 (°C) | 265 | 220 | 208 |
| Bending strength*3 -($kg/mm^2$) (MPa) | 19.6 (192) | 16.0 (157) | 15.3 (150) |
| Bending modulus*3 -($kg/mm^2$) (GPa) | 442 | 400 | 351 |
| Deflection in bending*3 | 0.068 (4.34) | 0.040 (3.92) | 0.061 (3.44) |
| Water absorption (boiling for 48 hrs)*3 (%) | 5.8 | 6.8 | 5.0 |

Notes: *1 Boron trifluoride-monoethylamine complex

*2 TMA method

*3 JIS K-6911

EXAMPLE 5

An insulating coating material was prepared by compounding 100 parts of the triglycidyl derivative of Example 1, 145 parts of methyltetrahydrophthalic anhydride, 0.2 part of 2-ethyl-4-methylimidazole and 735 parts of alumina (ALM-43 manufactured by Sumitomo Aluminium K.K.) and uniformly homogenizing them with a triple roll. The material could be easily coated on printed circuit boards or the like by the use of an applicator. It was poured into a mould and cured first at 120°C for 60 minutes, then at 160°C for 60 minutes and further at 200°C for 30 minutes. The properties of the moulded product were measured

according to JIS-K-6911. The results are listed in Table 4.

COMPARATIVE EXAMPLE 1

A composition was prepared according to the same formulation as in Example 5, except that the triglycidyl derivative of Example 1 was replaced with Sumiepoxy ELM-120 (which is the triglycidyl derivative of m-aminophenol). Thus, according to the formulation shown in Table 4, a composition was prepared and homogenized by the use of a triple roll. However, no flowable compounded mixture could be obtained because of the high viscosity of the resin. Accordingly, it was difficult to handle as an insulating coating material.

TABLE 4

| | Example 5 | Comparative Example 1 |
|---|---|---|
| Epoxy resin of Example 1 | 100 | - |
| ELM-120 | - | 100 |
| Methyltetrahydrophthalic anhydride | 145 | 124 |
| 2-Ethyl-4-methylimidazole | 0.2 | 0.2 |
| Alumina | 735 | 672 |
| HDT (°C) | 183 | Unmeasurable because of the poor workability of the coating material |
| Barcol hardness | 78 | |
| Water absorption (boiling for 2 hrs) (%) | 0.16 | |
| Volume resistivity (Ω-cm) | $2.2 \times 10^{16}$ | |

EXAMPLE 6

The expoxy resins and curing agents shown in Table 5 were compounded according to the formulations shown in Table 5 to give methyl ethyl ketone solutions having a solids content of 60% by weight. Carbon fibre (Magnamite AS-4, manufactured by Hercules Inc., the word "Magnamite" is a Registered Trade Mark) was continously impregnated with each of the solutions thus obtained and was then wound up on a drum coated with a silicone release paper. The amount of the adherent resin solution was regulated by passing the impregnated carbon fibre through two stainless steel rods a controlled distance apart.

The carbon fibre impregnated with the resin solution and wound on the release paper was cut open and withdrawn and the placed in a hot air oven at 120 °C for about 10 minutes to prepare a dry prepreg.

After being squeezed out of the carbon fibre prepreg, all the epoxy resin compositions of the invention, i.e. resin compositions composed of triglycidyl-4-amino-m-cresol and diaminodiphenylsulphone (hereinafter, simply referred to as DDS), had as low a viscosity as 10 poises (1 Pa.s) or below at 50 °C. The pot life (workable time) of the resin composition was longer than 1 hour at 100 °C.

The carbon fibre content of the prepregs was regulated at 55% by volume.

Each of the prepregs thus obtained was charged into a matched die so that the carbon fibre content was 60% by volume after being moulded, and it was heated and moulded under pressure for one hour by means of a hot press heated to a predetermined temperature. The moulded product thus obtained was further post-cured in a hot air circulation type oven under predetermined conditions. Thereafter, the interlaminar shear strength and bending strength of the moulded product was measured according to ASTM D-2344 and ASTM D-790. The results are shown in Table 5.

EXAMPLE 7

Carbon fibre-reinforced composite materials were prepared by repeating the procedure of Example 6, except that the polyglycidyl compounds and 4,4'-diaminodiphenylsulphone shown in Table 6 were used in the amounts shown in Table 6. The properties of the composite materials obtained were measured to give the results shown in Table 6.

EXAMPLE 8

Moulded products of carbon fibre-reinforced composite materials were prepared by repeating the procedure of Example 7, except that the epoxy resins shown in Table 7 and 4,4'-diaminodiphenylsulphone were used. The moulded products obtained were dipped in boiling water for 48 hours, and then their properties were measured. The results are shown in Table 7.

Table 5

| No. | Resin | Curing agent | | Moulding conditions | | | |
|---|---|---|---|---|---|---|---|
| | | Kind | Amount (PHR) | In die | | Post-cure | |
| | | | | Temp. (°C) | Time (hr) | Temp. (°C) | Time (hr) |
| Experiment 1 | Triglycidyl-4-amino-m-cresol | 4,4'-DDM | 47 | 130 | 1 | 150 | 4 |
| " 2 | (Epoxy value 105) | 4,4'-DDS | 59 | 150 | " | 180 | 4 |
| " 3 | | 3,3'-DDS | 59 | 150 | " | 180 | 2 |
| " 4 | (The same resin was used in Experiments 1 - 5.) | $BF_3$·MEA | 5 | 150 | " | 160 | 4 |
| " 5 | | 2E4MZ | 3 | 120 | " | 140 | 4 |
| Comparative Example 2 | Sumiepoxy ELM-120 *1 (manfd. by Sumitomo Chemical Co., Ltd.) | 4,4'-DDM | 41 | 150 | " | 160 | 4 |
| " 3 | (Epoxy value 120) | 4,4'-DDS | 52 | 170 | " | 190 | 4 |
| " 4 | | 3,3'-DDS | 52 | 170 | " | 190 | 2 |
| " 5 | (The same resin was used in Comp. Examples 2 - 6.) | $BF_3$·MEA | 5 | 150 | " | 160 | 4 |
| " 6 | | 2E4MZ | 3 | 120 | " | 140 | 4 |

to be cont'd

Notes: $BF_3$·MEA: Boron trifluoride-monoethylamine complex; 2E4MZ: 2-Ethyl-4-methylimidazole; DDM: Diaminodiphenylmethane; DDS: Diaminodiphenylsulfone *1: Triglycidylaminophenol

Table 5 (Cont'd)

| Properties of moulded product | | |
|---|---|---|
| Bending | | Interlaminar shear strength $kg/mm^2$ (MPa) |
| Strength $kg/mm^2$ (GPa) | Modulus $ton/mm^2$ (GPa) | |
| 175 (1.72) | 12.1 (119) | 11.1 (109) |
| 200 (1.96) | 12.3 (121) | 13.3 (130) |
| 204 (2.00) | 12.3 (121) | 13.5 (132) |
| 172 (1.69) | 12.2 (120) | 9.4 (92.2) |
| 174 (1.71) | 12.0 (118) | 9.5 (93.2) |
| 174 (1.71) | 12.2 (120) | 9.6 (94.2) |
| 191 (1.87) | 12.4 (122) | 12.5 (123) |
| 193 (1.89) | 12.4 (122) | 12.7 (125) |
| 170 (1.67) | 12.1 (119) | 8.9 (87.3) |
| 171 (1.68) | 12.0 (118) | 9.0 (88.3) |

Table 6

| No. | Resin | 4,4'-Diamino-diphenylsulfone (DDS) Amount (PHR) | Molar ratio *1 | Bending strength $kg/mm^2$ (GPa) | Interlaminar shear strength $kg/mm^2$ (MPa) | Heat distortion tempera-ture of molded product (°C) |
|---|---|---|---|---|---|---|
| Experiment 6 | Triglycidyl-4-amino-m-cresol *2 (The same resin was used in Exp. 6 - 10.) | 23.6 | 0.4 | 190 (1.86) | 13.1 (129) | 265 |
| " 7 | | 35.4 | 0.6 | 210 (2.06) | 13.5 (132) | 275 |
| " 8 | | 47.2 | 0.8 | 215 (2.11) | 13.6 (133) | 275 |
| " 9 | | 59.0 | 1.0 | 200 (1.96) | 13.3 (130) | 275 |
| " 10 | | 82.7 | 1.4 | 191 (1.90) | 13.1 (129) | 270 |
| Comparative Example 7 | Sumiepoxy *3 ELM-120 (manufd. by Sumitomo Chem. Co., Ltd.) (The same resin was used in Comp. Exp. 7 - 11.) | 20.8 | 0.4 | 170 (1.67) | 11.9 (117) | 183 |
| " 8 | | 31.2 | 0.6 | 184 (1.81) | 12.4 (122) | 200 |
| " 9 | | 41.6 | 0.8 | 193 (1.89) | 12.6 (1.24) | 212 |
| " 10 | | 52.0 | 1.0 | 191 (1.87) | 12.5 (123) | 212 |
| " 11 | | 72.8 | 1.4 | 172 (1.69) | 12.0 (118) | 200 |

*1: Theoretical value calculated from the quantities of epoxy group and amino group is taken as unity.

*2: Molding conditions: In die 150°C x 1 hr; Post-cure 180°C x 4 hrs; Cure of resin only 180°C x 4 hrs.

*3: Molding conditions: In die 170°C x 1 hr; Post-cure 190°C x 4 hrs; Cure of resin only 190°C x 4 hrs.

Table 7

| No. | Epoxy resin | 4,4'-Diaminodiphenylsulfone: Amount (PHR) | 4,4'-Diaminodiphenylsulfone: Molar ratio *1 | Bending strength after 48 hrs. in boiling water $kg/mm^2$ (GPa) | Interlaminar shear strength after 48 hrs. in boiling water $kg/mm^2$ (MPa) |
|---|---|---|---|---|---|
| Experiment 11 | Triglycidyl-4-amino-m-cresol | 47.2 | 0.8 | 205 (2.01) | 11.6 (114) |
| Comparative Example 12 | Sumiepoxy ELM-120 (manufd. by Sumitomo Chemical Co., Ltd.) | 41.6 | 0.8 | 170 (1.67) | 8.3 (81.4) |

*1: Theoretical value calculated from the quantities of epoxy group and amino group is taken as unity.

EXAMPLE 9

A mixture consisting of 200 parts of triglycidyl-4-amino-m-cresol and 94.4 parts of 4,4'-diaminodiphenylsulphone was stirred at 100°C for 30 minutes. As the result, the 4,4'-diaminodiphenylsulphone dissolved

completely and a uniform liquid composition was obtained.

The composition was a viscous liquid at room temperature. Its viscosity measured at 100 °C with a cone plate viscometer was 10 poises (1 Pa.s) or below, and its pot life (workable time) was more than 1 hour at 100 °C. The composition thus obtained was used for a filament winding process.

While keeping the liquid resin composition at 100 °C, the same carbon fibre as used in Example 4 was continuously impregnated with the resin composition and wound up on a cylindrical mandrel sufficiently coated with a mould release agent, according to the filament winding process. The angle of winding was regulated so as to make 90° with the mandrel axis. The tubular product thus formed composed of the resin-impregnated carbon fibre and the mandrel was cured for 4 hours, while continuously rotating it, in an oven kept at 180 °C. After slowly cooling the cured product, the mandrel was withdrawn. Thus, a fibre-reinforced tubular product was obtained.

The cured product thus obtained was cut into pieces, and the cut surface was examined by means of scanning electron microscope to confirm the absence of air bubbles. The carbon fibre content was 58% by volume. The tubular product was cut perpendicularly with regard to the mandrel axis and tested according to NOL-ring method. The results are shown in Table 8.

The NOL ring tensile strength was measured according to ASTM D-2290.

**Table 8**

| | 25°C | 180°C |
|---|---|---|
| Tensile strength $kg/mm^2$ (GPa) | 210 (2.06) | 160 (1.57) |
| Tensile modulus $t/mm^2$ (GPa) | 13.0 (128) | 12.6 (127) |

EXAMPLE 10

A matrix resin composition was prepared by dissolving 800 g of N,N,N',N'-tetraglycidylbis-(aminophenyl)-methane (Sumiepoxy ELM-434, manufactured by Sumitomo Chemical Co. Ltd., epoxy equivalent 120), 200 g of triglycidyl-4-amino-m-cresol (epoxy equivalent 105) and 425 g of 4,4'-diaminodiphenlysulphone into 1,45- g of methyl ethyl ketone. Then, a carbon fibre (Magnamite AS-4, manufactured by Hercules Inc.) was drawn and arranged in one direction and then impregnated with the resin solution after which it was dried at 120 °C for 5 minutes to prepare a prepreg.

The epoxy resin composition squeezed out of this carbon fibre prepreg had a viscosity of 10.5 poises (1.05 Pa.s) or below at 50 °C. The resin composition was cured for 4 hours at 180 °C, and the cured product had a Tg of 265 °C.

The carbon fibre conent of the prepreg was regulated to be 55% by volume.

The prepreg was charged into a matched die so that the carbon fibre content was 60% by volume after moulding, and it was heated and moulded under elevated pressure for one hour in a hot press heated to 160 °C. The moulded product was further post-cured in a hot air circulation type oven at 180 °C for 4 hours to complete its cure. Thus, a moulded product of one-directionally reinforced carbon fibre-reinforced composite material (CFRP plate) having a thickness of 2 mm was obtained.

The moulded product had a heat distortion temperature of 260 °C. The bending strength and ILSS of the CFRP were measured according to ASTM D-790 and ASTM D-2344, respectively. The results are shown in Table 9.

Table 9

| Item of measurement | | Temperature of measurement | 20°C | 150°C | 180°C |
|---|---|---|---|---|---|
| Bending (0° from fibre axis) | Strength | kg/mm$^2$ (GPa) | 210 (2.06) | 170 (1.67) | 158 (1.55) |
| | Modulus | t/mm$^2$ (GPa) | 12.6 (124) | 12.5 (123) | 12.3 (121) |
| Bending (90° from fiber axis) | Strength | kg/mm$^2$ (MPa) | 14.5 (142) | 12.2 (110) | 11.0 (108) |
| | Modulus | t/mm$^2$ | 1.01 (9.91) | 0.99 (9.71) | 0.97 (9.52) |
| ILSS kg/mm$^2$ | | | 13.6 (133) | 9.0 (88.3) | 8.0 (75.5) |

COMPARATIVE EXAMPLE 13

A matrix resin composition was prepared by dissolving 1,000 g of N,N,N',N'-tetraglycidylbis-(aminophenyl)-methane (Sumiepoxy ELM-434, manufactured by Sumitomo Chemical Co. Ltd., epoxy equivalent 120) and 413 g of 4,4'-diaminodiphenylsulphone in 1,450 g of methyl ethyl ketone. Thereafter, the procedure of Example 10 was repeated to prepare a prepreg. The prepreg was press-moulded at 170°C for one hour and then post-cured at 180°C for 4 hours to complete its cure. Thus, a moulded product of one-directionally reinforced carbon fibre-reinforced composite material (CFRP plate) having a thickness of 2 mm was obtained.

The moulded product had a heat distortion temperature of 245 °C. The bending strength and ILSS of the CFRP plate were measured under the same conditions as in Example 10. The results are shown in Table 10.

Table 10

| Item of measurement \ Temperature of measurement | | 20°C | 150°C | 180°C |
|---|---|---|---|---|
| Bending (0° from fiber axis) | Strength kg/mm$^2$ (GPa) | 191 (1.87) | 153 (1.50) | 140 (1.37) |
| | Modulus t/mm$^2$ (GPa) | 12.4 (122) | 12.2 (120) | 12.1 (119) |
| Bending (90° from fiber axis) | Strength kg/mm$^2$ (MPa) | 11.0 (108) | 9.0 (88.3) | 8.2 (80.4) |
| | Modulus t/mm$^2$ (GPa) | 1.00 (9.81) | 0.99 (9.71) | 0.98 (9.61) |
| ILSS (kg/mm$^2$) (MPa) | | 11.7 115) | 7.9 (77.5) | 6.3 (61.1) |

COMPARATIVE EXAMPLE 14

A matrix resin composition was prepared by dissolving 800 g of N,N,N',N'-tetraglycidylbis-(aminophenyl)-methane (Sumiepoxy ELM-434, manufactured by Sumitomo Chemical Co. Ltd., epoxy equivalent 120), 200 g of Sumiepoxy ELM-120 (manufactured by Sumitomo Chemical Co. Ltd., epoxy

equivalent 120) and 413 g of 4,4'-diaminodiphenylsulphone in 1,450 g of methyl ethyl ketone. Then, in the same manner as in Example 10, a prepreg was prepared and the prepreg was press-moulded at 170 °C for one hour and post-cured at 180 °C for 4 hours to complete its cure. Thus, a moulded product of one-directionally reinforced carbon fibre-reinforced composite material (CFRP plate) was obtained.

The moulded product had a heat distortion temperature of 230 °C. Its bending strength and ILSS were measured under the same conditions as in Example 10. The results are shown in Table 11.

Table 11

| Item of measurement \ Temperature of measurement | | | 20°C | 150°C | 180°C |
|---|---|---|---|---|---|
| Bending (0° from fiber axis) | Strength | kg/mm² (GPa) | 200<br>1.96 | 148<br>(1.45) | 137<br>(1.36) |
| | Modulus | t/mm² (GPa) | 12.8<br>(126) | 12.6<br>(124) | 12.1<br>(119) |
| Bending (90° from fiber axis) | Strength | kg/mm² (MPa) | 13.3<br>(130) | 11.1<br>(109) | 9.8<br>(96.1) |
| | Modulus | t/mm² (GPa) | 1.03<br>(10.1) | 0.95<br>(9.32) | 0.90<br>(8.83) |
| ILSS kg/mm² | (MPa) | | 12.5<br>(122.6) | 8.2<br>(80.4) | 6.4<br>(62.8) |

EXAMPLE 11

An epoxy resin composition for a prepreg was prepared by thoroughly stirring 60 parts of Sumiepoxy ELPN-180 (manufactured by Sumitomo Chemical Co. Ltd.), 40 parts of a 1:1 mixture of ELA-128 and ESA-019 and 15 parts of triglycidyl-4-amino-m-cresol in a hot kneader, followed by adding 7 parts of dicyandiamide and 5 parts of dichlorophenyl-1,1-dimethylurea thereto, and thoroughly stirring and homogenizing the mixture.

The composition thus obtained had good fluidity. It formed a gel in 7 minutes at 120 °C. The resin composition was cured for 2 hours at 130 °C and the cured product had a Tg of 180 °C.

The carbon fibre (Magnamite AS-4, manufactured by Hercules Inc.) drawn and arranged in one direction was impregnated with a heated and melted product of the above-mentioned resin composition to give a one-directional prepreg. The prepreg thus obtained had appropriate tackiness and flexibility.

When stored at 20 °C for a month, this prepreg showed only slight changes in tackiness and flexibility, demonstrating its excellent storage stability.

EXAMPLE 12

The prepreg obtained in Example 11 was charged into a matched die so that the carbon fibre content was 60% by volume after moulding, and it was pressed and cured in a press heated to 120 °C for a period of 60 minutes under a pressure of 7 kg/cm$^2$ (687 KPa). Then, it was after-cured for 2 hours in an oven at 130 °C to complete its cure. Thus, a one-directionally reinforced carbon fibre-reinforced composite material (CFRP plate) having a thickness of 2 mm was obtained. The bending strength and ILSS of the CFRP plate were measured according to ASTM D-790 and ASTM D-2344, respectively. The results are shown in Table 12.

Table 12

| Item of measurement \ Temperature of measurement | | | 20°C | 100°C |
|---|---|---|---|---|
| Bending (0° from fiber axis) | Strength | kg/mm$^2$ (GPa) | 210 (2.06) | 190 (1.86) |
| | Modulus | t/mm$^2$ (GPa) | 12.8 (126) | 12.5 (123) |
| Bending (90° from fiber axis) | Strength | kg/mm$^2$ (MPa) | 10.5 (103) | 8.9 (87.3) |
| | Modulus | t/mm$^2$ (GPa) | 0.93 (9.12) | 0.90 (8.83) |
| ILSS (kg/mm$^2$) (MPa) | | | 11.2 (110) | 8.9 (87.3) |

COMPARATIVE EXAMPLE 15

In place of the epoxy resins used in Example 11, 20 parts of ELPN-180, 20 parts of ELA-128 and 20 parts of ESA-019 were thoroughly stirred in a hot kneader. Then, 7 parts of dicyandiamide and 5 parts of dichlorophenyl-1,1-dimethylurea were added, and the mixture was treated in the same manner as described in Example 11 to give a one-directionally reinforced carbon fibre prepreg. The prepreg thus obtained was comparable to that of Example 11 in tackiness and flexibility. Its storage stability was as good as 1.5 months at 20 °C. However, its optimum curing temperature was so high that its thermal cure took 60 minutes at 140 °C.

The prepreg was after-cured for 2 hours in an oven kept at 150 °C to complete its cure. Thus, a one-directionally reinforced carbon fibre-reinforced composite material (CFRP plate) having a thickness of 2 mm was obtained. The bending strength and ILSS were measured in the same manner as in Example 12 to give the results as shown in Table 13.

Table 13

| Item of measurement \ Temperature of measurement | | 20°C | 100°C |
|---|---|---|---|
| Bending (0° from fiber axis) | Strength $kg/mm^2$ (GPa) | 190 (1.86) | 175 (1.72) |
| | Modulus $t/mm^2$ (GPa) | 12.5 (123) | 12.3 (121) |
| Bending (90° from fiber axis) | Strength $kg/mm^2$ (MPa) | 9.1 (123) | 7.7 (121) |
| | Modulus $t/mm^2$ (GPa) | 0.92 (9.08) | 0.89 (8.73) |
| ILSS ($kg/mm^2$) | (MPa) | 9.0 (88.3) | 7.1 (69.7) |

COMPARATIVE EXAMPLE 16

In place of the epoxy resins used in Example 11, 100 parts of ELPN-180 only was used. After adding 7 parts of dicyandiamide and 5 parts of dichlorophenyl-1,1-dimethylurea, the mixture was treated in the same manner as in Example 11 to prepare an epoxy resin composition for a prepreg. Then, it was moulded under the same conditions as in Comparative Example 14 to give a one-directionally reinforced carbon fibre-reinforced composite material (CFRP plate) having a thickness of 2 mm.

The bending strength and ILSS of the CFRP plate thus obtained were measured in the same manner as in Example 12 to give the results shown in Table 14.

TABLE 14

| Item of measurement \ Temperature of measurement | | | 20°C | 100°C |
|---|---|---|---|---|
| Bending (0° from fiber axis) | Strength | $kg/mm^2$ (GPa) | 176 (1.73) | 168 (1.65) |
| | Modulus | $t/mm^2$ (GPa) | 12.6 (124) | 12.5 (123) |
| Bending (90° from fiber axis) | Strength | $kg/mm^2$ (MPa) | 8.1 (79.9) | 7.3 (71.2) |
| | Modulus | $t/mm^2$ (GPa) | 0.93 (9.12) | 0.91 (8.93) |
| ILSS ($kg/mm^2$) (MPa) | | | 7.9 (77.5) | 6.6 (64.7) |

COMPARATIVE EXAMPLE 17

An epoxy resin composition for a prepreg was prepared under the same conditions as in Example 11, except that 60 parts of ELPN-180, 40 parts of 1:1 mixture of ELA-128 and ESA-019 and 15 parts of ELM-120 were used in place of the epoxy resins used in Example 11. Then, the composition was moulded under the same conditions as in Comparative Example 15 to give a one-directionally reinforced carbon fibre-reinforced composite material (CFRP plate) having a thickness of 2 mm. The bending strength and ILSS were measured as in Example 12 to give the results shown in Table 15.

TABLE 15

| Item of measurement \ Temperature of measurement | | 20°C | 100°C |
|---|---|---|---|
| Bending (0° from fiber axis) | Strength $kg/mm^2$ (GPa) | 200 (1.96) | 182 (1.79) |
| | Modulus $t/mm^2$ (GPa) | 13.0 | 12.8 |
| Bending (90° from fiber axis) | Strength $kg/mm^2$ (KPa) | 9.6 (94.2) | 8.1 (79.5) |
| | Modulus $t/mm^2$ (GPa) | 0.95 (9.32) | 0.92 (9.03) |
| ILSS $kg/mm^2$ (KPa) | | 10.5 (103) | 8.1 (79.5) |

**Claims**

1. A triglycidyl derivative of 4-amino-m-cresol or 3-ethyl-4-amino-phenol.

2. An epoxy resin composition which comprises a triglycidyl derivative as defined in claim 1 together with a curing agent therefor.

3. A fibre-reinforced composite material which comprises, as matrix, a cured product of an epoxy resin composition as claimed in claim 2.

4. A heat-resistant fibre-reinforced composite material which comprises, as matrix, a cured product of an epoxy resin composition comprising:
   (A) a triglycidyl derivative as defined in claim 1;
   (B) N,N,N',N'-tetraglycidylbis(aminophenyl)-methane and/or a condensation product thereof, and
   (C) an epoxy curing agent.

5. A composite material as claimed in claim 4 in which the curing agent is a diaminodiphenylsulphone compound.

6. A fibre-reinforced composite material which comprises, as matrix, a cured product of an epoxy resin composition comprising
   (A) a triglycidyl derivative as defined in claim 1,
   (B') a phenol novolac type epoxy resin, cresol novolac type epoxy resin and/or Bisphenol A diglycidyl ether type epoxy resin, and
   (C) an epoxy curing agent.

7. A composite material as claimed in claim 6 in which the epoxy curing agent is dicyandiamide.

**Patentansprüche**

1. Triglycidylderivat von 4-Amino-m-kresol oder 3-Ethyl-4-amino-phenol.

2. Epoxyharzmasse, welche ein Triglycidylderivat nach Anspruch 1 sowie ein Härtungsmittel für dieses enthält.

3. Faserverstärktes Verbundmaterial, welches - als Matrix - ein Härtungsprodukt einer Epoxyharzmasse nach Anspruch 2 enthält.

4. Wärmebeständiges, faserverstärktes Verbundmaterial, welches - als Matrix - ein Härtungsprodukt einer Epoxyharzmasse, umfassend:
   (A) ein Triglycidylderivat nach Anspruch 1;
   (B) N, N, N',N'-Tetragycidylbis(aminophenyl)methane und/oder ein Kondensationsprodukt desselben, und
   (C) ein Epoxyhärtungsmittel,
   enthält.

5. Verbundmaterial nach Anspruch 4, in welchem das Härtungsmittel aus einer Diaminodiphenylsulfonverbindung besteht.

6. Faserverstärktes Verbundmaterial, welches - als Matrix ein Härtungsprodukt einer Epoxyharzmasse, umfassend
   (A) ein Triglycidylderivat nach Anspruch 1;
   (B) ein Epoxyharz vom Phenolnovolak-, Kresolnovolak- und/oder Bisphenol A-Digycidylethertyp, und
   (C) ein Epoxyhärtungsmittel,
   enthält.

7. Verbundmaterial nach Anspruch 6, in welchem das Epoxyhärtungsmittel aus Dicyandiamid besteht.

**Revendications**

1. Dérivé triglycidylique du 4-amino-m-crésol ou du 3-éthyl-4-aminophénol.

2. Composition de résine époxy, qui contient un dérivé triglycidylique selon la revendication 1 avec un agent de durcissement approprié.

3. Matériau composite renforcé par des fibres, qui comprend, comme matrice, un produit durci d'une composition de résine époxy selon la revendication 2.

4. Matériau composite renforcé par des fibres résistant à la chaleur, qui comprend, comme matrice, un produit durci d'une composition de résine époxy contenant
   A) un dérivé triglycidylique selon la revendication 1;
   B) du N,N,N',N'-tétraglycidylbis(aminophényl)méthane et/ou un de ses produits de condensation, et
   C) un agent de durcissement pour résine époxy.

5. Matériau composite selon la revendication 4, dans lequel l'agent de durcissement est un dérivé de diaminodiphénylsulfone.

6. Matériau composite renforcé par des fibres qui comprend, comme matrice, un produit durci d'une composition de résine époxy contenant
   A) un dérivé triglycidylique selon la revendication 1,
   B) une résine époxy de type novolaque phénolique, une résine époxy de type novolaque crésolique et/ou une résine époxy de type éther diglycidylique de Bisphénol A, et
   C) un agent de durcissement pour résine époxy.

7. Matériau composite selon la revendication 6, dans lequel l'agent de durcissement pour résine époxy est le dicyandiamide.